(19)

Europäisches
Patentamt

European
Patent Office

Office européen
des brevets

(11)   **EP 4 432 693 B1**

(12)   # EUROPEAN PATENT SPECIFICATION

(45) Date of publication and mention
of the grant of the patent:
**11.02.2026   Bulletin 2026/07**

(21) Application number: **22891612.8**

(22) Date of filing: **06.09.2022**

(51) International Patent Classification (IPC):
***H04Q 11/00*** *(2006.01)*      ***H04L 47/70*** *(2022.01)*

(52) Cooperative Patent Classification (CPC):
**H04L 47/70; H04Q 11/00; H04Q 11/0067;**
H04Q 2011/0064; H04Q 2213/1301;
H04Q 2213/13196; H04Q 2213/13332

(86) International application number:
**PCT/CN2022/117388**

(87) International publication number:
**WO 2023/082807 (19.05.2023 Gazette 2023/20)**

(54)   **FIBER-TO-THE-ROOM BANDWIDTH ALLOCATION METHOD, OPTICAL GATEWAY, AND COMPUTER-READABLE STORAGE MEDIUM**

VERFAHREN ZUR BANDBREITENZUWEISUNG ZWISCHEN FASERN, OPTISCHE GATEWAY UND COMPUTERLESBARES SPEICHERMEDIUM

PROCÉDÉ D'ATTRIBUTION DE BANDE PASSANTE DE FIBRE JUSQU'À LA PIÈCE, PASSERELLE OPTIQUE, ET SUPPORT DE STOCKAGE LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **15.11.2021   CN 202111347076**

(43) Date of publication of application:
**18.09.2024   Bulletin 2024/38**

(73) Proprietor: ZTE Corporation
**Shenzhen, Guangdong  518057 (CN)**

(72) Inventors:
• WANG, Peng
**Shenzhen, Guangdong 518057 (CN)**
• CAI, Liyong
**Shenzhen, Guangdong 518057 (CN)**
• ZHANG, Lin
**Shenzhen, Guangdong 518057 (CN)**

(74) Representative: **Savi, Massimiliano et al**
**Notarbartolo & Gervasi S.p.A.**
**Viale Achille Papa, 30**
**20149 Milano (IT)**

(56) References cited:
CN-A- 101 197 627      CN-A- 102 523 539
CN-A- 111 586 501      CN-A- 112 887 851
US-A1- 2020 092 622

• **"F5G Technology Landscape F5G Technology Landscape", no. V0.0.7, 19 March 2021 (2021-03-19), pages 1 - 58, XP014394924, Retrieved from the Internet <URL:ftp:// docbox.etsi.org/ISG/F5G/70-Draft/ 003_Techno_Landscape/ F5G-003_Techno_Landscapev007.zip F5G-003_Techno_Landscapev007_clean.docx> [retrieved on 20210319]**

## Description

### TECHNICAL FIELD

Embodiments of the present disclosure relate to the technical field of optical communication, and in particular, to a Fiber to The Room (FTTR) bandwidth allocation method, an optical gateway, and a computer-readable storage medium.

### BACKGROUND

With the continuous development of optical networks, bandwidth network services are evolving towards the Fixed 5th-Generation (F5G) era with 10G Passive Optical Network (PON) and Wireless Fidelity (Wi-Fi) 6 as the mainstream. Compared to previous generations of fixed access technologies, F5G offers several excellent features, such as ultra-high network access rate, all-optical connection, and excellent network experience. An F5G home private network is an extension of an optical fiber to a room based on Fiber To The Home (FTTH) to realize all-optical networking in the home, and is used in combination with the 10G PON and Wi-Fi 6 technologies to achieve gigabit coverage of the entire house and solve the problems such as insufficient Wi-Fi signal coverage and unsatisfactory rate in the room, thereby achieving safe and reliable gigabit coverage throughout the house.

FTTR can be achieved using two technical schemes: Point to Point (P2P) and Point to Multi Point (P2MP). A P2MP networking method is as follows. A wide area network (WAN) side of a P2MP optical gateway is generally a 10G PON, and a local area network (LAN) side of the P2MP optical gateway may be a Gigabit-Capable PON (GPON) or a 10G PON, which is connected to one or more optical routers through an optical splitter for networking. A WAN side of the optical router is a GPON or a 10G PON. The P2MP technical scheme offers advantages of a large number of connected devices, convenient capacity expansion, and a measured rate over one gigabit at a single point. However, it also has disadvantages, including two levels of bandwidth scheduling, uneven bandwidth allocation, and high delay, which can affect the user experience.

CN112887851A relates to a household all-optical network system and an implementation method thereof. The household all-optical network system comprises a local side OLT, an FTTR optical gateway and a plurality of edge ONUs. The FTTR optical gateway comprises a first ONU standard optical interface, an OLT short-distance optical interface, a PON ONU MAC and a processing unit. The PON ONU MAC is connected with the processing unit, the processing unit is respectively connected with the first ONU standard optical interface and the OLT short-distance optical interface, the first ONU standard optical interface is connected with the local side OLT, and the OLT short-distance optical interface is connected with each edge ONU.

"FSG Technology Landscape F5G Technology Landscape", ETSI DRAFT SPECIFICATION; F5G 003, EUROPEAN TELECOMMUNICATIONS STANDARDS INSTITUTE (ETSI), 650, ROUTE DES LUCIOLES ; F-06921 SOPHIA-ANTIPOLIS ; FRANCE no. V0.0.7 19 March 2021 (2021-03-19), pages 1-58, XP014394924, relates to technology requirements for F5G use cases, explores existing technologies, and performs the gap analysis.

### SUMMARY

The invention is set out in the appended set of claims.

The following is a summary of the subject matter set forth in this description.

In accordance with a first aspect of the present disclosure, an embodiment provides an FTTR bandwidth allocation method, applied to an optical gateway, the method including: acquiring a packet from an optical router; identifying a service type of the optical router according to a protocol type of the packet; determining a service requirement type according to a delay and a bandwidth requirement of the service type; analyzing a bandwidth allocation slot of an Optical Line Terminal (OLT) and an internal delay of the optical gateway; and allocating a bandwidth to the optical router according to the service requirement type, the bandwidth allocation slot, and the internal delay.

In accordance with a second aspect of the present disclosure, an embodiment provides an optical gateway, including: a memory, a processor, and a computer program stored in the memory and executable by the processor, where the computer program, when executed by the processor, causes the processor to carry out the FTTR bandwidth allocation method in accordance with the first aspect.

In accordance with a third aspect of the present disclosure, an embodiment provides an electronic device, including: a memory, a processor, and a computer program stored in the memory and executable by the processor, where the computer program, when executed by the processor, causes the processor to carry out the FTTR bandwidth allocation method in accordance with the first aspect.

In accordance with a fourth aspect of the present disclosure, an embodiment provides a computer-readable storage medium, storing a computer-executable program which, when executed by a processor, causes the processor to carry out the FTTR bandwidth allocation method in accordance with the first aspect.

The embodiments of the present disclosure include: acquiring, by an optical gateway, a packet from an optical router; identifying a service type of the optical router according to a protocol type of the packet; determining a service requirement type according to a delay and a bandwidth requirement of the service type; analyzing a bandwidth allocation slot of an OLT and an internal delay of the optical gateway; and allocating a bandwidth to the optical router according to the service requirement type, the bandwidth allocation slot, and the internal delay.

Additional features and advantages of the present disclosure will be set forth in the description which follows, and in part will be obvious from the description, or may be learned by the practice of the present disclosure. The objects and other advantages of the present disclosure can be realized and obtained by the structures particularly pointed out in the description, claims, and drawings.

BRIEF DESCRIPTION OF DRAWINGS

The drawings are provided for a further understanding of the technical schemes of the present disclosure, and constitute a part of the description. The drawings and the embodiments of the present disclosure are used to illustrate the technical schemes of the present disclosure, but are not intended to limit the technical schemes of the present disclosure.

FIG. 1 is a main flowchart of an FTTR bandwidth allocation method according to an embodiment of the present disclosure;

FIG. 2 is a schematic structural diagram of FTTR networking according to an embodiment of the present disclosure;

FIG. 3 is a detailed flowchart of an FTTR bandwidth allocation method according to an embodiment of the present disclosure;

FIG. 4 is a detailed flowchart of step 105 according to an embodiment of the present disclosure;

FIG. 5 is a schematic diagram of different service systems of a single optical router according to an embodiment of the present disclosure;

FIG. 6 is a schematic diagram of different service systems of a plurality of optical routers according to an embodiment of the present disclosure;

FIG. 7 is another schematic diagram of different service systems of a plurality of optical routers according to an embodiment of the present disclosure;

FIG. 8 is a schematic diagram of an implementation of two levels of bandwidth scheduling according to an embodiment of the present disclosure;

FIG. 9 is a flowchart of an FTTR bandwidth allocation method according to an embodiment of the present disclosure;

FIG. 10 is a schematic structural diagram of an optical gateway according to an embodiment of the present disclosure; and

FIG. 11 is a schematic structural diagram of an electronic device according to an embodiment outside the subject-matter of the claims.

DETAILED DESCRIPTION

To make the objects, technical schemes, and advantages of the present disclosure clear, the present disclosure is described in further detail in conjunction with accompanying drawings and examples. It should be understood that the specific embodiments described herein are merely used for illustrating the present disclosure, and are not intended to limit the present disclosure.

It should be understood that in the description of the embodiments of the present disclosure, the term "plurality of" (or multiple) means at least two, the term such as "greater than", "less than", "exceed" or variants thereof prior to a number or series of numbers is understood to not include the number adjacent to the term. The term "at least" prior to a number or series of numbers is understood to include the number adjacent to the term "at least", and all subsequent numbers or integers that could logically be included, as clear from context. If used herein, the terms such as "first" and "second" are merely used for distinguishing technical features, and are not intended to indicate or imply relative importance, or implicitly point out the number of the indicated technical features, or implicitly point out the order of the indicated technical features.

With the continuous development of optical networks, bandwidth network services are developing towards the F5G era with 10G PON and Wi-Fi 6 as the mainstream. Compared with previous generations of fixed access technologies, F5G has a series of excellent features such as ultra-high network access rate, all-optical connection, and excellent network experience. An F5G home private network is an extension of an optical fiber to a room based on FTTH to realize all-optical networking in the home, and is used in combination with the 10G PON and Wi-Fi 6 technologies to achieve gigabit coverage of the entire house and solve the problems such as insufficient Wi-Fi signal coverage and unsatisfactory rate in the room, thereby achieving safe and reliable gigabit coverage throughout the house.

FTTR can be achieved using two technical schemes: P2P and P2MP. A P2MP networking method is as follows. A WAN side of a P2MP optical gateway is generally a 10G PON, and a LAN side of the P2MP optical gateway may be a GPON or a 10G PON, which is connected to one or more optical routers through an optical splitter for networking. A WAN side of the optical router is a GPON or a 10G PON. The P2MP technical scheme has the advantages of a large number of connected devices, convenient capacity expansion, and a measured rate over one gigabit at a single point, but also has the disadvantages such as two levels of bandwidth scheduling, uneven bandwidth allocation, and high delay, affecting user experience.

In recent years, with the rapid development of smart home, Virtual Reality (VR) technology, telemedicine, and other services, telecommunication operators, home users, and enterprise users have increasingly higher requirements for the bandwidth and user experience of optical fiber access. For example, 4K video streams require a bandwidth of 30 Mbps/person, voice streams require a delay of less than 30 ms, and VR streams require a bandwidth of 50 Mbps/person and a delay of less than 15 ms. Such streams are very sensitive to bandwidth and delay. The uneven bandwidth allocation and delay problems brought about by P2MP networking have great impact on user experience.

Existing related technologies fail to provide an effective scheme to solve the above problems, and how to solve the above problems in practical applications has become a problem that needs to be solved in FTTR scenarios.

To solve the uneven bandwidth allocation and delay problems brought about by P2MP networking, embodiments of the present disclosure provide an FTTR bandwidth allocation method, an optical gateway, and a computer-readable storage medium. An optical gateway acquires a packet from an optical router; identifies a service type of the optical router according to a protocol type of the packet; determines a service requirement type according to a delay and a bandwidth requirement of the service type; analyzes a bandwidth allocation slot of an OLT and an internal delay of the optical gateway; and allocates a bandwidth to the optical router according to the service requirement type, the bandwidth allocation slot, and the internal delay. The optical gateway identifies the service requirement type of the optical router and the bandwidth allocation size and slot of the OLT, to achieve service classification and sorting of the optical router and bandwidth analysis and adjustment of the OLT. The optical gateway allocates the bandwidth to the optical router according to the service requirement type and slots of two levels of bandwidth allocation, to realize the seamless connection in the two levels of bandwidth scheduling, thereby reducing the service delay and improving bandwidth utilization. Through the active bandwidth release mechanism of the optical router, the bandwidth of the optical router can be fully utilized to improve user experience. Based on this, the present disclosure can reduce the service delay in FTTR P2MP scenarios, improve bandwidth utilization, and thereby improve user experience.

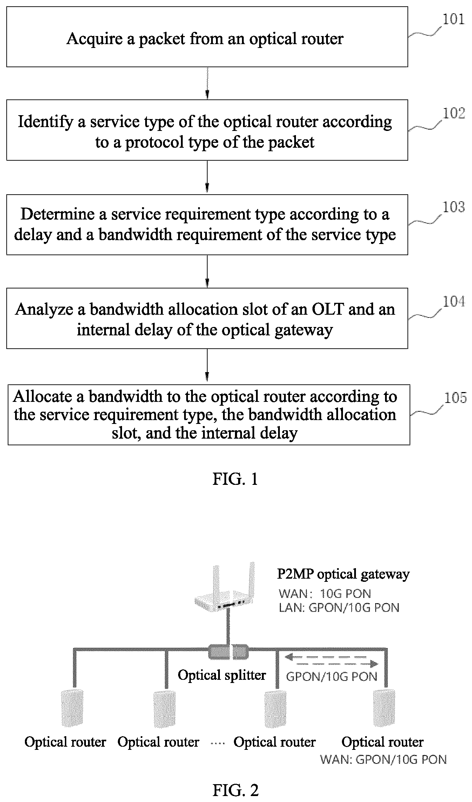

FIG. 1 is a main flowchart of an FTTR bandwidth allocation method according to an embodiment of the present disclosure. The FTTR bandwidth allocation method includes the following steps.

In a step of 101, a packet is acquired from an optical router.

In a step of 102, a service type of the optical router is identified according to a protocol type of the packet.

In a step of 103, a service requirement type is determined according to a delay and a bandwidth requirement of the service type.

In a step of 104, a bandwidth allocation slot of an OLT and an internal delay of the optical gateway are analyzed.

In a step of 105, a bandwidth is allocated to the optical router according to the service requirement type, the bandwidth allocation slot, and the internal delay.

It can be understood that an optical gateway acquires a packet from an optical router; identifies a service type of the optical router according to a protocol type of the packet; determines a service requirement type according to a delay and a bandwidth requirement of the service type; analyzes a bandwidth allocation slot of an OLT and an internal delay of the optical gateway; and allocates a bandwidth to the optical router according to the service requirement type, the bandwidth allocation slot, and the internal delay. The optical gateway identifies the service requirement type of the optical router and the bandwidth allocation size and slot of the OLT, to achieve service classification and sorting of the optical router and bandwidth analysis and adjustment of the OLT. The optical gateway allocates the bandwidth to the optical router according to the service requirement type and slots of two levels of bandwidth allocation, to realize the seamless connection in the two levels of bandwidth scheduling, thereby reducing the service delay and improving bandwidth utilization. Through the active bandwidth release mechanism of the optical router, the bandwidth of the optical router can be fully utilized to improve user experience.

It can be understood that as shown in FIG. 2, the optical gateway may be connected to one or more optical routers.

A service requirement type of an optical router is identified through Artificial Intelligence (AI) according to a protocol type of a packet sent by the optical router. For example, if the optical router sends a Highway Addressable Remote Transducer (HART) packet, the optical gateway may identify that the user is performing VR interaction through the optical router. If the optical router sends a multicast join packet, the optical gateway may identify that the user is watching IPTV video through the optical router. If the optical router sends a Session Initiation Protocol (SIP) packet, the optical gateway may identify that the user is making a voice call through the optical router. A single optical router may perform a single or multiple services at the same time.

It can be understood that service types may include VR, IPTV, and voice.

It can be understood that according to delay and bandwidth requirements of service types, services can be divided into four service requirement types. The service requirement types include a low-latency high-bandwidth service, a low-latency low-bandwidth service, a high-latency high-bandwidth service, and a high-latency low-bandwidth service.

It can be understood that after identifying service types of services of the optical router through AI, the optical gateway may classify the services as the corresponding service requirement types and sort the services. For example, VR interaction may be classified as a low-latency high-bandwidth service, an IPTV video may be classified as a high-latency high-bandwidth service, and a voice call may be classified as a low-latency low-bandwidth service. When the services are sorted according to latency, VR > voice > IPTV. When the services are sorted according to bandwidth requirements, VR > IPTV > voice. In the present disclosure, VR, IPTV, and voice are used as examples only, and there may also be other service requirement types, such as cloud gaming, cloud education, remote maintenance, etc.

It can be understood that while identifying the service of the optical router through AI, the optical gateway needs to record and analyze the bandwidth size and allocation slot of the OLT, and determine through calculation whether a current bandwidth allocated by the OLT meets all service requirements of the optical router connected to the optical gateway. If the bandwidth allocation slot does not meet the service requirements, the optical gateway may send a private Physical Layer Operation Administration and Maintenance (PLOAM) or Optical Network Unit (ONU) Management And Control Interface (OMCI) message to instruct the OLT to reduce a bandwidth allocation cycle or perform bandwidth allocation multiple times within one frame to reduce the delay. If the bandwidth size does not meet the service requirements, the optical gateway may send a private PLOAM or OMCI message to instruct the OLT to increase the allocated bandwidth. In a Status Reporting (SR) mode, the optical gateway may also apply for a larger bandwidth by increasing a Dynamic Bandwidth Report Upstream (DBRu) value.

It can be understood that there are two levels of bandwidth scheduling in the P2MP networking mode of the optical gateway, and the difference between time of arrival of bandwidth delivered by the OLT and time of arrival of bandwidth delivered by the optical gateway is likely to cause nonalignment between the two levels of bandwidth allocation. If the delivery of the bandwidth by the optical gateway is earlier than the delivery of the bandwidth by the OLT, a packet backlog may occur at the optical gateway, leading to an increased service delay. If the delivery of the bandwidth by the optical gateway is later than the delivery of the bandwidth by the OLT, the optical gateway may miss part of the bandwidth allocation slot of the OLT, resulting in a decrease in bandwidth utilization. The optical gateway analyzes the bandwidth allocation slot of the OLT and the internal delay of the optical gateway. The bandwidth allocation slot of the OLT includes $StartTime_{olt}$, $GrantSize_{olt}$, and the bandwidth allocation cycle of the bandwidth delivered by the OLT. The internal delay of the optical gateway mainly refers to a packet forwarding delay InsideDelay. A line propagation delay Propagation Delay$_i$, of the optical router also needs to be considered. A start time $StartTime_i$ of bandwidth allocation for the optical router may be calculated by the following formula:

$$StartTime_i = StartTime_{olt} - InsideDelay - Propagation\ Delay_i.$$

It can be understood that the bandwidth allocation size $GrantSize_i$ and the bandwidth allocation cycle of the optical router are adjusted according to the service requirement type. For example, for a low-latency high-bandwidth service, $GrantSize_i$ is increased, and at the same time, the bandwidth allocation cycle is reduced or bandwidth allocation is performed multiple times within one frame to reduce the delay. For a high-latency high-bandwidth service, $GrantSize_i$ is increased, and at the same time, the bandwidth allocation cycle is increased. For a low-latency low-bandwidth service, $GrantSize_i$ is reduced, and at the same time, the bandwidth allocation cycle is reduced or bandwidth allocation is performed multiple times within one frame to reduce the delay. For a high-latency low-bandwidth service, $GrantSize_i$ is reduced, and at the same time, the bandwidth allocation cycle is increased. It should be noted that the optical gateway may further improve the bandwidth allocation precision for the optical router through AI learning based on the above bandwidth allocation policy.

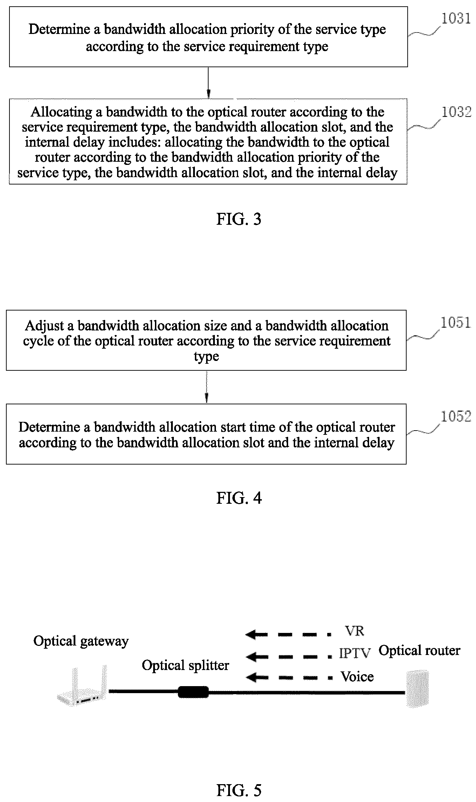

As shown in FIG. 3, after step 103, the method may further include the following steps.

In a step of 1031, a bandwidth allocation priority of the service type is determined according to the service requirement type.

In a step of 1032, allocating a bandwidth to the optical router according to the service requirement type, the bandwidth allocation slot, and the internal delay includes: allocating the bandwidth to the optical router according to the bandwidth allocation priority of the service type, the bandwidth allocation slot, and the internal delay.

It can be understood that after identifying service types of services of the optical router through AI, the optical gateway may classify the services as the corresponding service requirement types and sort the services to determine bandwidth allocation priorities corresponding to the service types, and then allocate the bandwidth to the optical router according to the bandwidth allocation priorities corresponding to the service types. For example, VR interaction may be classified as a low-latency high-bandwidth service, an IPTV video may be classified as a high-latency high-bandwidth service, and a voice call may be classified as a low-latency low-bandwidth service. When the services are sorted according to latency, VR > voice > IPTV. When the services are sorted according to bandwidth requirements, VR > IPTV > voice. In the present disclosure, VR, IPTV, and voice are used as examples only, and there may also be other service requirement types, such as cloud gaming, cloud education, remote maintenance, etc.

It can be understood that the optical router also has an active bandwidth release mechanism. In the P2MP networking scenario where the optical gateway is connected to a plurality of optical routers, when an optical router does not need to send service data, the optical gateway usually still allocates an OMCI bandwidth and a service bandwidth to the optical router periodically, resulting in a waste of bandwidth. In view of this, the optical router may regularly detect whether there is service data to send. When the optical router determines that a duration during which there is no data to send reaches a time length, the optical router may send a private PLOAM or OMCI message to instruct the optical gateway to stop the allocation of the OMCI bandwidth and the service bandwidth for a period of time, or the optical gateway may instruct the optical router to switch from a normal state to an energy-saving state. When the optical router determines that there is data to send, the optical router may send a private PLOAM or OMCI message to instruct the optical gateway to resume the bandwidth allocation, or the optical gateway may instruct the optical router to switch from the energy-saving state to the normal state. The bandwidth actively released by the optical router may be allocated to other optical routers having a data service, to improve the bandwidth utilization of the optical routers.

As shown in FIG. 4, step 105 may include the following steps.

In a step of 1051, a bandwidth allocation size and a bandwidth allocation cycle of the optical router are adjusted according to the service requirement type.

In a step of 1052, a bandwidth allocation start time of the optical router is determined according to the bandwidth allocation slot and the internal delay.

It can be understood that the bandwidth allocation size N2 and the bandwidth allocation cycle of the optical router may be adjusted according to the service requirement type. In an embodiment, the bandwidth of the optical router is increased when it is determined that the service requirement type is a low-latency high-bandwidth service or a high-latency high-bandwidth service; the bandwidth of the optical router is reduced when it is determined that the service requirement type is a low-latency low-bandwidth service or a high-latency low-bandwidth service; the bandwidth allocation cycle of the optical router is reduced when it is determined that the service requirement type is a low-latency high-bandwidth service or a low-latency low-bandwidth service; and the bandwidth allocation cycle of the optical router is increased when it is determined that the service requirement type is a high-latency high-bandwidth service or a high-latency low-bandwidth service.

It can be understood that for a low-latency high-bandwidth service, N2 may be increased, and at the same time, the bandwidth allocation cycle may be reduced or bandwidth allocation may be performed multiple times within one frame; for a high-latency high-bandwidth service, N2 may be increased, and at the same time, the bandwidth allocation cycle may be increased; for a low-latency low-bandwidth service, N2 may be reduced, and at the same time, the bandwidth allocation cycle may be reduced or bandwidth allocation may be performed multiple times within one frame; and for a high-latency low-bandwidth service, N2 may be reduced, and at the same time, the bandwidth allocation cycle may be increased. It should be noted that the optical gateway may further improve the bandwidth allocation precision for the optical router through AI learning.

It can be understood that there are two levels of bandwidth scheduling in the P2MP networking mode of the optical gateway, and the difference between time of arrival of bandwidth delivered by the OLT and time of arrival of bandwidth delivered by the optical gateway is likely to cause nonalignment between the two levels of bandwidth allocation. If the delivery of the bandwidth by the optical gateway is earlier than the delivery of the bandwidth by the OLT bandwidth, a packet backlog may occur at the optical gateway, leading to an increased service delay. If the delivery of the bandwidth by the optical gateway is later than the delivery of the bandwidth by the OLT, the optical gateway may miss part of the bandwidth allocation slot of the OLT, resulting in a decrease in bandwidth utilization. The optical gateway analyzes the bandwidth allocation slot of the OLT and the internal delay of the optical gateway. The bandwidth allocation slot of the OLT includes $StartTime_{olt}$, $GrantSize_{olt}$, and the bandwidth allocation cycle of the bandwidth delivered by the OLT. The internal delay of the optical gateway mainly refers to a packet forwarding delay InsideDelay. A line propagation delay Propagation $Delay_i$, of the optical router also needs to be considered. A start time $StartTime_i$ of bandwidth allocation for the optical router may be calculated by the following formula:

$$StartTime_i = StartTime_{olt} - InsideDelay - Propagation\ Delay_i.$$

The FTTR bandwidth allocation method provided in the present disclosure is further described below in conjunction with specific embodiments.

As shown in FIG. 5, in a P2MP networking scenario where the optical gateway is connected to a single optical router, the optical router has three services: VR, IPTV, and voice. The optical gateway may identify service requirement types of the services of the optical router through AI according to protocol types of packets sent by the optical router, and classify and sort the services. To realize the distinguishing and scheduling of the three services of the optical router, the optical gateway may configure three separate sending channels for the optical router.

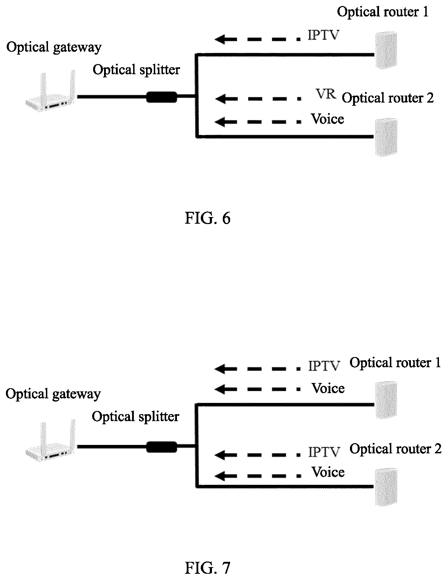

As shown in FIG. 6, in a P2MP networking scenario where the optical gateway is connected to two optical routers, an optical router 1 has an IPTV service, and an optical router 2 has two services, i.e., VR and voice. The optical gateway may identify service requirement types of the services of the two optical routers through AI according to protocol types of packets sent by the optical routers, and classify and sort the services. To realize the distinguishing and scheduling of the two services of the optical router 2, the optical gateway may configure two separate sending channels for the optical router 2.

As shown in FIG. 7, in a P2MP networking scenario where the optical gateway is connected to two optical routers, an optical router 1 has two services, i.e., IPTV and voice, and an optical router 2 also has two services, i.e., VR and voice. The optical gateway may identify service requirement types of the services of the two optical routers through AI according to protocol types of packets sent by the optical routers, and classify and sort the services. To realize the distinguishing and scheduling of the two services of each of the optical router 1 and the optical router 2, the optical gateway may configure two separate sending channels for each of the optical router 1 and the optical router 2.

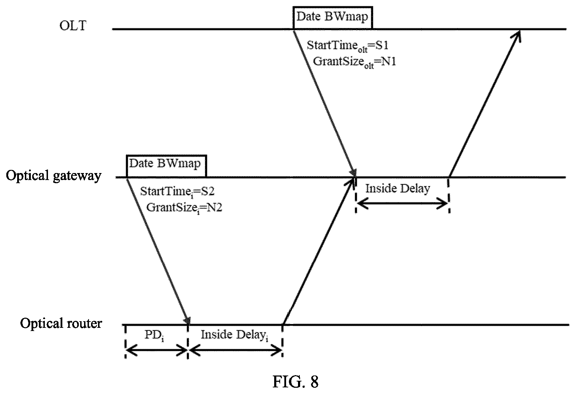

As shown in FIG. 8, there are two levels of bandwidth scheduling in the P2MP networking mode of the optical gateway. A first level of scheduling includes $StartTime_{olt}=S1$, $GrantSize_{olt}=N1$, and a bandwidth allocation cycle of the bandwidth delivered by the OLT. A second level of scheduling includes $StartTime_i=S2$, $GrantSize_i=N2$, and a bandwidth allocation cycle of the bandwidth delivered by the optical gateway. The internal delay InsideDelay of the optical gateway is a packet forwarding delay. A line propagation delay of the optical router is defined as $PD_i$. The start time S2 of bandwidth allocation for the optical router may be calculated by the following formula:

$$S2 = S1 - InsideDelay - PD_i.$$

The bandwidth allocation size N2 and the bandwidth allocation cycle of the optical router may be adjusted according to the service requirement type. For a low-latency high-bandwidth service, N2 may be increased, and at the same time, the bandwidth allocation cycle may be reduced or bandwidth allocation may be performed multiple times within one frame; for a high-latency high-bandwidth service, N2 may be increased, and at the same time, the bandwidth allocation cycle may be increased; for a low-latency low-bandwidth service, N2 may be reduced, and at the same time, the bandwidth allocation cycle may be reduced or bandwidth allocation may be performed multiple times within one frame; and for a high-latency low-bandwidth service, N2 may be reduced, and at the same time, the bandwidth allocation cycle may be increased. The optical gateway may further improve the bandwidth allocation precision for the optical router through AI learning.

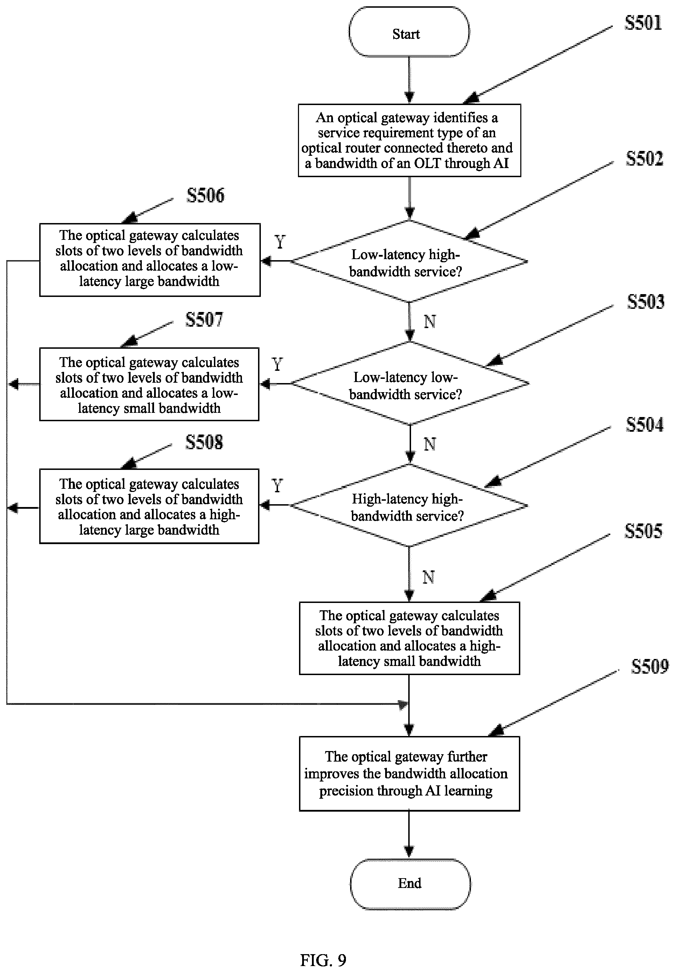

As shown in FIG. 9, an FTTR bandwidth allocation method includes the following steps.

In a step of S501, an optical gateway identifies a service requirement type of an optical router connected thereto and a bandwidth of an OLT through AI.

In a step of S502, the optical gateway determines whether the service requirement type of the optical router is a low-latency high-bandwidth service. If yes, S506 is executed; otherwise, S503 is executed.

In the step of S503, the optical gateway determines whether the service requirement type of the optical router is a low-latency low-bandwidth service. If yes, S507 is executed; otherwise, S504 is executed.

In the step of S504, the optical gateway determines whether the service requirement type of the optical router is a high-latency high-bandwidth service. If yes, S508 is executed; otherwise, S505 is executed.

In the step of S505, the optical gateway calculates slots of two levels of bandwidth allocation and allocates a high-latency small bandwidth to a corresponding service of the optical router.

In the step of S506, the optical gateway calculates slots of two levels of bandwidth allocation and allocates a low-latency large bandwidth to a corresponding service of the optical router.

In the step of S507, the optical gateway calculates slots of two levels of bandwidth allocation and allocates a low-latency small bandwidth to a corresponding service of the optical router.

In the step of S508, the optical gateway calculates slots of two levels of bandwidth allocation and allocates a high-latency large bandwidth to a corresponding service of the optical router.

In a step of S509, the optical gateway further improves the bandwidth allocation precision through AI learning.

Based on this, the optical gateway identifies the service requirement type of the optical router and the bandwidth allocation size and slot of the OLT, to achieve service classification and sorting of the optical router and bandwidth analysis and adjustment of the OLT. The optical gateway allocates the bandwidth to the optical router according to the service requirement type and slots of two levels of bandwidth allocation, to realize the seamless connection in the two levels of bandwidth scheduling, thereby reducing the service delay and improving bandwidth utilization. Through the active bandwidth release mechanism of the optical router, the bandwidth of the optical router can be fully utilized to improve user experience.

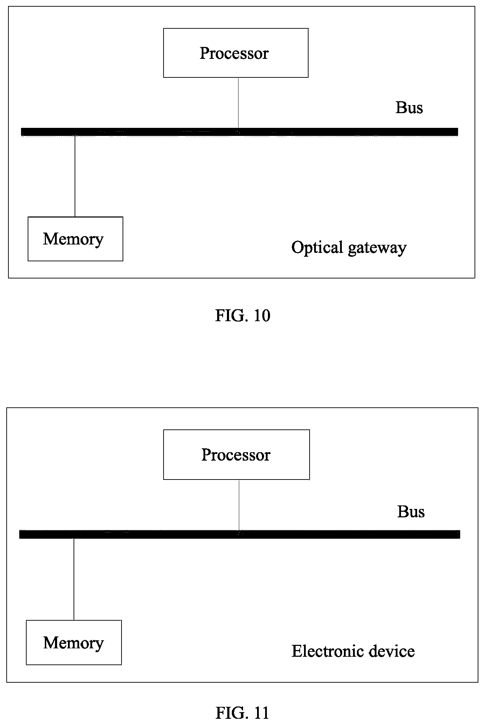

As shown in FIG. 10, an embodiment of the present disclosure provides an optical gateway.

In an embodiment, the optical gateway includes one or more processors and one or more memories. FIG. 10 uses one processor and one memory as an example. The processor and the memory may be connected by a bus or in other ways. Connection by a bus is used as an example in FIG. 10.

The memory, as a non-transitory computer-readable storage medium, may be configured for storing a non-transitory software program and a non-transitory computer-executable program, for example, the FTTR bandwidth allocation method in the embodiments of the present disclosure. The processor executes the non-transitory software program and the non-transitory computer-executable program stored in the memory, to carry out the FTTR bandwidth allocation method in the embodiments of the present disclosure.

The memory may include a program storage area and a data storage area. The program storage area may store an operating system, and an application required by at least one function. The data storage area may store data and the like required for executing the FTTR bandwidth allocation method in the embodiments of the present disclosure. In addition, the memory may include a high-speed random access memory, and may also include a non-transitory memory, e.g., at least one magnetic disk storage device, flash memory device, or other non-transitory solid-state storage device. In some implementations, the memory includes memories located remotely from the processor, and the remote memories may be connected to the optical gateway via a network. Examples of the network include the Internet, an intranet, a local area network, a mobile communication network, and combinations thereof.

The non-transitory software program and the non-transitory computer-executable program required for carrying out the FTTR bandwidth allocation method in the embodiments of the present disclosure are stored in the memory which, when executed by one or more processors, cause the one or more processors to carry out the FTTR bandwidth allocation method in the embodiments of the present disclosure, for example, carry out the method steps 101 to 105 in FIG. 1, the method steps 1031 to 1032 in FIG. 3, or the method steps 1051 to 1052 in FIG. 4. The optical gateway acquires a packet from an optical router; identifies a service type of the optical router according to a protocol type of the packet; determines a service requirement type according to a delay and a bandwidth requirement of the service type; analyzes a bandwidth allocation slot of an OLT and an internal delay of the optical gateway; and allocates a bandwidth to the optical router according to the service requirement type, the bandwidth allocation slot, and the internal delay. The optical gateway identifies the service requirement type of the optical router and the bandwidth allocation size and slot of the OLT, to achieve service classification and sorting of the optical router and bandwidth analysis and adjustment of the OLT. The optical gateway allocates the bandwidth to the optical router according to the service requirement type and slots of two levels of bandwidth allocation, to realize the seamless connection in the two levels of bandwidth scheduling, thereby reducing the service delay and improving bandwidth utilization. Through the active bandwidth release mechanism of the optical router, the bandwidth of the optical router can be fully utilized to improve user experience.

As shown in FIG. 11, an embodiment outside the subject-matter of the claims provides an electronic device.

In an embodiment, the electronic device includes one or more processors and one or more memories. FIG. 11 uses one processor and one memory as an example. The processor and the memory may be connected by a bus or in other ways. Connection by a bus is used as an example in FIG. 11.

The memory, as a non-transitory computer-readable storage medium, may be configured for storing a non-transitory software program and a non-transitory computer-executable program, for example, the FTTR bandwidth allocation method in the embodiments of the present disclosure. The processor executes the non-transitory software program and the non-transitory computer-executable program stored in the memory, to carry out the FTTR bandwidth allocation method in the embodiments of the present disclosure.

The memory may include a program storage area and a data storage area. The program storage area may store an operating system, and an application required by at least one function. The data storage area may store data and the like required for executing the FTTR bandwidth allocation method in the embodiments of the present disclosure. In addition, the memory may include a high-speed random access memory, and may also include a non-transitory memory, e.g., at least one magnetic disk storage device, flash memory device, or other non-transitory solid-state storage device. In some implementations, the memory includes memories located remotely from the processor, and the remote memories may be connected to the optical gateway via a network. Examples of the network include the Internet, an intranet, a local area network, a mobile communication network, and combinations thereof.

The non-transitory software program and the non-transitory computer-executable program required for carrying out the FTTR bandwidth allocation method in the embodiments of the present disclosure are stored in the memory which, when executed by one or more processors, cause the one or more processors to carry out the FTTR bandwidth allocation method in the embodiments of the present disclosure, for example, carry out the method steps 101 to 105 in FIG. 1, the method steps 1031 to 1032 in FIG. 3, or the method steps 1051 to 1052 in FIG. 4. The electronic device acquires a packet from an optical router; identifies a service type of the optical router according to a protocol type of the packet; determines a service requirement type according to a delay and a bandwidth requirement of the service type; analyzes a bandwidth allocation slot of an OLT and an internal delay of the optical gateway; and allocates a bandwidth to the optical router according to the service requirement type, the bandwidth allocation slot, and the internal delay. The optical gateway identifies the service requirement type of the optical router and the bandwidth allocation size and slot of the OLT, to achieve service classification and sorting of the optical router and bandwidth analysis and adjustment of the OLT. The optical gateway allocates the bandwidth to the optical router according to the service requirement type and slots of two levels of bandwidth allocation, to realize the seamless connection in the two levels of bandwidth scheduling, thereby reducing the service delay and improving bandwidth utilization. Through the active bandwidth release mechanism of the optical router, the bandwidth of the optical router can be fully utilized to improve user experience.

In addition, an embodiment of the present disclosure provides a computer-readable storage medium, storing a computer-executable program which, when executed by a processor of the optical gateway in FIG. 10, causes the processor of the optical gateway to carry out the FTTR bandwidth allocation method in the embodiments of the present disclosure, for example, carry out the method steps 101 to 105 in FIG. 1, the method steps 1031 to 1032 in FIG. 3, or the method steps 1051 to 1052 in FIG. 4. An optical gateway acquires a packet from an optical router; identifies a service type of the optical router according to a protocol type of the packet; determines a service requirement type according to a delay and a bandwidth requirement of the service type; analyzes a bandwidth allocation slot of an OLT and an internal delay of the optical gateway; and allocates a bandwidth to the optical router according to the service requirement type, the bandwidth allocation slot, and the internal delay. The optical gateway identifies the service requirement type of the optical router and the bandwidth allocation size and slot of the OLT, to achieve service classification and sorting of the optical router and bandwidth analysis and adjustment of the OLT. The optical gateway allocates the bandwidth to the optical router according to the service requirement type and slots of two levels of bandwidth allocation, to realize the seamless connection in the two levels of bandwidth scheduling, thereby reducing the service delay and improving bandwidth utilization. Through the active bandwidth release mechanism of the optical router, the bandwidth of the optical router can be fully utilized to improve user experience.

Therefore, the embodiments of the present disclosure provide an FTTR bandwidth allocation method, an optical gateway, and a computer-readable storage medium, which can reduce the service delay in FTTR P2MP scenarios, improve bandwidth utilization, and thereby improve user experience.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as a computer-readable program, data structures, program modules, or other data). The computer storage medium includes a Random Access Memory (RAM), a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skillS in the art, the communication medium typically includes a computer-readable program, data structures, program modules, or other data in a modulated data signal such as a carrier or other transport mechanism, and can include any information delivery medium.

## Claims

1. A Fiber to The Room, FTTR, bandwidth allocation method, applied to an optical gateway, **characterized by** the method comprising:

   acquiring a packet from an optical router (101);
   identifying a service type of the optical router according to a protocol type of the packet (102);
   determining a service requirement type according to a delay and a bandwidth requirement of the service type (103);

analyzing a bandwidth allocation slot of an Optical Line Terminal, OLT, and an internal delay of the optical gateway (104); and

allocating a bandwidth to the optical router according to the service requirement type, the bandwidth allocation slot, and the internal delay (105).

2. The method of claim 1, wherein the service requirement type comprises a low-latency high-bandwidth service, a low-latency low-bandwidth service, a high-latency high-bandwidth service, and a high-latency low-bandwidth service.

3. The method of claim 1, wherein after determining a service requirement type according to a delay and a bandwidth requirement of the service type (103), the method further comprises:

determining a bandwidth allocation priority of the service type according to the service requirement type (1031); and

allocating a bandwidth to the optical router according to the service requirement type, the bandwidth allocation slot, and the internal delay (105) comprises:

allocating the bandwidth to the optical router according to the bandwidth allocation priority of the service type, the bandwidth allocation slot, and the internal delay (1032).

4. The method of claim 1, further comprising:

stopping the allocation of the bandwidth to the optical router in response to determining that the optical router has not sent service data within a preset time period; and

resuming the allocation of the bandwidth to the optical router in response to determining that the optical router sends service data again.

5. The method of claim 1, further comprising:

sending a first notification instruction to the optical router in response to determining that the optical router has not sent service data within a preset time period, to cause the optical router to switch from a normal mode to an energy-saving mode according to the first notification instruction; and

sending a second notification instruction to the optical router in response to determining that the optical router sends service data again, to cause the optical router to switch from the energy-saving mode to the normal mode according to the second notification instruction.

6. The method of claim 1, wherein allocating a bandwidth to the optical router according to the service requirement type, the bandwidth allocation slot, and the internal delay (105) comprises:

adjusting a bandwidth allocation size and a bandwidth allocation cycle of the optical router according to the service requirement type (1051); and

determining a bandwidth allocation start time of the optical router according to the bandwidth allocation slot and the internal delay (1052).

7. The method of claim 6, wherein adjusting a bandwidth allocation size and a bandwidth allocation cycle of the optical router according to the service requirement type (1051) comprises:

increasing the bandwidth of the optical router in response to determining that the service requirement type is a low-latency high-bandwidth service or a high-latency high-bandwidth service;

reducing the bandwidth of the optical router in response to determining that the service requirement type is a low-latency low-bandwidth service or a high-latency low-bandwidth service;

reducing the bandwidth allocation cycle of the optical router in response to determining that the service requirement type is a low-latency high-bandwidth service or a low-latency low-bandwidth service; and

increasing the bandwidth allocation cycle of the optical router in response to determining that the service requirement type is a high-latency high-bandwidth service or a high-latency low-bandwidth service.

8. An optical gateway, comprising: a memory, a processor, and a computer program stored in the memory and executable by the processor, wherein the computer program, when executed by the processor, causes the processor to carry out the FTTR bandwidth allocation method of any one of claims 1 to 7.

9. A computer-readable storage medium, storing a computer-executable program which, when executed by an optical gateway of claim 8, causes the optical gateway to carry out the FTTR bandwidth allocation method of any one of claims 1 to 7.

**Patentansprüche**

1. Verfahren zur Bandbreitenzuweisung für Fiber-to-the-Room (FTTR), das auf ein optisches Gateway angewendet wird, **dadurch gekennzeichnet, dass** das Verfahren umfasst:

   Erfassen eines Pakets von einem optischen Router (101);
   Identifizieren eines Diensttyps des optischen Routers gemäß einem Protokolltyp des Pakets (102);
   Bestimmen eines Dienstanforderungstyps gemäß einer Verzögerung und einer Bandbreitenanforderung des Diensttyps (103);
   Analysieren eines Bandbreitenzuweisungsslots eines optischen Leitungsendgeräts (OLT, Optical Line Terminal) und einer internen Verzögerung des optischen Gateways (104); und
   Zuweisen einer Bandbreite an den optischen Router gemäß dem Dienstanforderungstyp, dem Bandbreitenzuweisungsslot und der internen Verzögerung (105).

2. Verfahren nach Anspruch 1, wobei der Dienstanforderungstyp einen Dienst mit geringer Latenz und hoher Bandbreite, einen Dienst mit geringer Latenz und geringer Bandbreite, einen Dienst mit hoher Latenz und hoher Bandbreite und einen Dienst mit hoher Latenz und geringer Bandbreite umfasst.

3. Verfahren nach Anspruch 1, wobei das Verfahren nach dem Bestimmen eines Dienstanforderungstyps gemäß einer Verzögerung und einer Bandbreitenanforderung des Diensttyps (103) ferner umfasst:

   Bestimmen einer Bandbreitenzuweisungspriorität des Diensttyps gemäß dem Dienstanforderungstyp (1031); und
   wobei das Zuweisen einer Bandbreite an den optischen Router gemäß dem Dienstanforderungstyp, dem Bandbreitenzuweisungsslot und der internen Verzögerung (105) umfasst:
   Zuweisen der Bandbreite an den optischen Router gemäß der Bandbreitenzuweisungspriorität des Diensttyps, dem Bandbreitenzuweisungsslot und der internen Verzögerung (1032).

4. Verfahren nach Anspruch 1, ferner umfassend:

   Beenden der Zuweisung der Bandbreite an den optischen Router als Reaktion auf das Bestimmen, dass der optische Router innerhalb eines voreingestellten Zeitraums keine Dienstdaten gesendet hat; und
   Wiederaufnehmen der Zuweisung der Bandbreite an den optischen Router als Reaktion auf das Bestimmen, dass der optische Router wieder Dienstdaten sendet.

5. Verfahren nach Anspruch 1, ferner umfassend:

   Senden einer ersten Benachrichtigungsanweisung an den optischen Router als Reaktion auf das Bestimmen, dass der optische Router innerhalb eines voreingestellten Zeitraums keine Dienstdaten gesendet hat, um den optischen Router zu veranlassen, gemäß der ersten Benachrichtigungsanweisung von einem Normalmodus in einen Energiesparmodus zu wechseln; und
   Senden einer zweiten Benachrichtigungsanweisung an den optischen Router als Reaktion auf das Bestimmen, dass der optische Router wieder Dienstdaten sendet, um den optischen Router zu veranlassen, gemäß der zweiten Benachrichtigungsanweisung von dem Energiesparmodus in den Normalmodus zu wechseln.

6. Verfahren nach Anspruch 1, wobei das Zuweisen einer Bandbreite an den optischen Router gemäß dem Dienstanforderungstyp, dem Bandbreitenzuweisungsslot und der internen Verzögerung (105) umfasst:

   Anpassen einer Bandbreitenzuweisungsgröße und eines Bandbreitenzuweisungszyklus des optischen Routers gemäß dem Dienstanforderungstyp (1051); und
   Bestimmen einer Bandbreitenzuweisungsstartzeit des optischen Routers gemäß dem Bandbreitenzuweisungsslot und der internen Verzögerung (1052).

**7.** Verfahren nach Anspruch 6, wobei das Anpassen einer Bandbreitenzuweisungsgröße und eines Bandbreitenzuweisungszyklus des optischen Routers gemäß dem Dienstanforderungstyp (1051) umfasst:

Erhöhen der Bandbreite des optischen Routers als Reaktion auf das Bestimmen, dass der Dienstanforderungstyp ein Dienst mit geringer Latenz und hoher Bandbreite oder ein Dienst mit hoher Latenz und hoher Bandbreite ist;

Verringern der Bandbreite des optischen Routers als Reaktion auf das Bestimmen, dass der Dienstanforderungstyp ein Dienst mit geringer Latenz und geringer Bandbreite oder ein Dienst mit hoher Latenz und geringer Bandbreite ist;

Verringern des Bandbreitenzuweisungszyklus des optischen Routers als Reaktion auf das Bestimmen, dass der Dienstanforderungstyp ein Dienst mit geringer Latenz und hoher Bandbreite oder ein Dienst mit geringer Latenz und geringer Bandbreite ist; und

Erhöhen des Bandbreitenzuweisungszyklus des optischen Routers als Reaktion auf das Bestimmen, dass der Dienstanforderungstyp ein Dienst mit hoher Latenz und hoher Bandbreite oder ein Dienst mit hoher Latenz und geringer Bandbreite ist.

**8.** Optisches Gateway, umfassend: einen Speicher, einen Prozessor und ein Computerprogramm, das in dem Speicher gespeichert ist und von dem Prozessor ausgeführt werden kann, wobei das Computerprogramm, wenn es von dem Prozessor ausgeführt wird, den Prozessor dazu veranlasst, das Verfahren zur Bandbreitenzuweisung für FTTR nach einem der Ansprüche 1 bis 7 durchzuführen.

**9.** Computerlesbares Speichermedium, das ein computerausführbares Programm speichert, das, wenn es von einem optischen Gateway nach Anspruch 8 ausgeführt wird, das optische Gateway dazu veranlasst, das Verfahren zur Bandbreitenzuweisung für FTTR nach einem der Ansprüche 1 bis 7 durchzuführen.

**Revendications**

**1.** Procédé d'allocation de bande passante de « fibre jusqu'à la pièce » (an Anglais « Fiber to The Room » pour FTTR), appliqué à une passerelle optique, **caractérisé par** le procédé comprenant :

acquérir un paquet à partir d'un routeur optique (101) ;
identifier un type de service du routeur optique selon un type de protocole du paquet (102) ;
déterminer un type d'exigence de service en fonction d'un retard et d'une exigence de bande passante du type de service (103) ;
analyser un créneau d'allocation de bande passante d'un terminal de ligne optique (en Anglais « Optical Line Terminal » pour OLT), et un retard interne de la passerelle optique (104) ; et
allouer une bande passante au routeur optique en fonction du type d'exigence de service, du créneau d'allocation de bande passante et du retard interne (105).

**2.** Procédé selon la revendication 1, dans lequel le type d'exigence de service comprend un service à bande passante élevée à faible latence, un service à bande passante faible à faible latence, un service à bande passante élevée à latence élevée et un service à bande passante faible à latence élevée.

**3.** Procédé selon la revendication 1, dans lequel après avoir déterminé un type d'exigence de service en fonction d'un retard et d'une exigence de bande passante du type de service (103), le procédé comprend en outre :

déterminer une priorité d'allocation de bande passante du type de service en fonction du type d'exigence de service (1031) ; et
allouer une bande passante au routeur optique en fonction du type d'exigence de service, du créneau d'allocation de bande passante et du retard interne (105) comprend :
allouer la bande passante au routeur optique en fonction de la priorité d'allocation de bande passante du type de service, du créneau d'allocation de bande passante et du retard interne (1032).

**4.** Procédé selon la revendication 1, comprenant en outre :

arrêter l'allocation de la bande passante au routeur optique en réponse à la détermination que le routeur optique n'a pas envoyé de données de service dans une période de temps prédéfinie ; et

reprendre l'allocation de la bande passante au routeur optique en réponse à la détermination que le routeur optique envoie à nouveau des données de service.

5. Procédé selon la revendication 1, comprenant en outre :

envoyer une première instruction de notification au routeur optique en réponse à la détermination que le routeur optique n'a pas envoyé de données de service dans une période de temps prédéfinie, pour amener le routeur optique à passer d'un mode normal à un mode d'économie d'énergie selon la première instruction de notification ; et

envoyer une deuxième instruction de notification au routeur optique en réponse à la détermination que le routeur optique envoie à nouveau des données de service, pour amener le routeur optique à passer du mode d'économie d'énergie au mode normal selon la deuxième instruction de notification.

6. Procédé selon la revendication 1, dans lequel l'allocation d'une bande passante au routeur optique en fonction du type d'exigence de service, du créneau d'allocation de bande passante et du retard interne (105) comprend :

ajuster une taille d'allocation de bande passante et un cycle d'allocation de bande passante du routeur optique en fonction du type d'exigence de service (1051) ; et

déterminer un temps de début d'allocation de bande passante du routeur optique en fonction du créneau d'allocation de bande passante et du retard interne (1052).

7. Procédé selon la revendication 6, dans lequel l'ajustement d'une taille d'allocation de bande passante et d'un cycle d'allocation de bande passante du routeur optique en fonction du type d'exigence de service (1051) comprend :

augmenter la bande passante du routeur optique en réponse à la détermination que le type d'exigence de service est un service à bande passante élevée à faible latence ou un service à bande passante élevée à latence élevée ;

réduire la bande passante du routeur optique en réponse à la détermination que le type d'exigence de service est un service à faible bande passante à faible latence ou un service à faible bande passante à latence élevée ;

réduire le cycle d'allocation de bande passante du routeur optique en réponse à la détermination que le type d'exigence de service est un service à bande passante élevée à faible latence ou un service à bande passante faible à faible latence ; et

augmenter le cycle d'allocation de bande passante du routeur optique en réponse à la détermination que le type d'exigence de service est un service à bande passante élevée à latence élevée ou un service à bande passante faible à latence élevée.

8. Passerelle optique, comprenant : une mémoire, un processeur et un programme informatique stocké dans la mémoire et exécutable par le processeur, dans laquelle le programme informatique, lorsqu'il est exécuté par le processeur, amène le processeur à mettre en oeuvre le procédé d'allocation de bande passante FTTR selon l'une quelconque des revendications 1 à 7.

9. Support de stockage lisible par ordinateur, stockant un programme exécutable par ordinateur qui, lorsqu'il est exécuté par une passerelle optique selon la revendication 8, amène la passerelle optique à mettre en œuvre le procédé d'allocation de bande passante FTTR selon l'une quelconque des revendications 1 à 7.

FIG. 1

FIG. 2

Determine a bandwidth allocation priority of the service type according to the service requirement type — 1031

Allocating a bandwidth to the optical router according to the service requirement type, the bandwidth allocation slot, and the internal delay includes: allocating the bandwidth to the optical router according to the bandwidth allocation priority of the service type, the bandwidth allocation slot, and the internal delay — 1032

FIG. 3

Adjust a bandwidth allocation size and a bandwidth allocation cycle of the optical router according to the service requirement type — 1051

Determine a bandwidth allocation start time of the optical router according to the bandwidth allocation slot and the internal delay — 1052

FIG. 4

Optical gateway

Optical splitter

VR

IPTV  Optical router

Voice

FIG. 5

Optical router 1

Optical gateway

IPTV

Optical splitter

VR Optical router 2

Voice

FIG. 6

IPTV Optical router 1
Voice

Optical gateway

Optical splitter

IPTV Optical router 2
Voice

FIG. 7

FIG. 8

FIG. 9

FIG. 10

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 112887851 A

**Non-patent literature cited in the description**

- ETSI DRAFT SPECIFICATION; F5G 003, EUROPEAN TELECOMMUNICATIONS STANDARDS INSTITUTE (ETSI), 650, ROUTE DES LUCIOLES ; F-06921 SOPHIA-ANTIPOLIS ; FRANCE. *FSG Technology Landscape F5G Technology Landscape*, 19 March 2021 (V0.0.7), 1-58